# EUROPÄISCHE PATENTSCHRIFT

(11) **EP 0 494 144 B1**
(45) Veröffentlichungstag und Bekanntmachung des Hinweises auf die Patenterteilung: **03.01.1996**
(21) Anmeldenummer: 90908483.2
(22) Anmeldetag: 13.06.1990
(51) Int. Cl.: A47F 7/02, A45C 11/16, A45C 13/02, B65D 81/02

(54) **PRÄSENTATIONSPOLSTER, VERFAHREN ZU SEINER HERSTELLUNG UND PRÄSENTATIONSSET**
DISPLAY CUSHION, PROCESS OF MAKING IT, AND DISPLAY SET
COUSSIN DE PRESENTATION, PROCEDE POUR SA FABRICATION ET SET DE PRESENTATION

(30) Priorität: 15.06.1989 DE 8907306 U; 22.07.1989 DE 8908935 U; 21.11.1989 DE 3938558; 07.04.1990 DE 9004078 U
(43) Veröffentlichungstag der Anmeldung: 15.07.1992
(73) Patentinhaber: FRIEDRICH KLING GmbH, D-75212 Birkenfeld (DE)
(72) Erfinder: Braun, Reiner, W-7540 Neuenbürg (DE)
(74) Vertreter: Pfeifer, Hans-Peter, Dr.rer.nat.
(86) Internationale Anmeldenummer: DE9000451
(87) Internationale Veröffentlichungsnummer: WO9015557

(56) Entgegenhaltungen:
- DE-A- 2 362 521
- DE-A- 3 205 035
- DE-U- 8 621 237
- GB-A- 1 415 291
- US-A- 4 098 938
- US-A- 4 432 456

## Beschreibung

Die Erfindung betrifft ein Präsentationspolster mit einer Polsterschicht aus elastischem Schaumstoff sowie ein Verfahren zur Herstellung solcher Polster.

Präsentationspolster dienen als Unterlage für Präsentationsobjekte in entsprechenden Behältern. Sie haben meist eine rechteckige Grundfläche, wobei zahlreiche verschiedene Größen entsprechend den Präsentationsobjekten hergestellt werden. Häufig werden sie in Verbindung mit Präsentationsladen verwendet.

Präsentationsladen dienen dazu, die Präsentationsobjekte in optisch ansprechender Form zu präsentieren. Beispielsweise werden in Juweliergeschäften Schmuckschränke verwendet, die eine Vielzahl von herausnehmbaren Laden enthalten. Vielfach sind Präsentationsladen spezifisch auf transportable Musterbehälter für Verkaufsreisende abgestimmt. Auch ein solcher Musterkoffer enthält eine Vielzahl von Laden.

Jede Präsentationslade hat üblicherweise eine Präsentationsfläche, die von einem verstärktem Rand umgeben ist. Die Präsentationsobjekte werden jeweils auf einem Präsentationspolster befestigt und auf der Präsentationsfläche in entsprechende mit Stegen abgeteilte Felder gelegt. Soweit Präsentationslade und Präsentationspolster als separate aber aufeinander abgestimmte und gemeinsam benutzte Teile angeboten werden, bezeichnet man sie auch als Präsentationsset, wobei beide Elemente in einem funktionellen Zusammenhang stehen. Auch ein solches Präsentationsset ist Gegenstand der vorliegenden Erfindung.

Die Erfindung richtet sich insbesondere auf die Präsentation von Schmuckstücken einschließlich Uhren. Darüber hinaus ist sie auch für andere Präsentationsobjekte mit Vorteil anwendbar, bei denen ähnliche Anforderungen gestellt werden. Im folgenden wird beispielhaft und ohne Beschränkungen der Allgemeinheit auf Schmuckpräsentationsladen (kurz: Schmuckladen) und Schmuckpräsentationspolster (kurz: Schmuckpolster) Bezug genommen.

Die bekannten Schmuckpolster werden weitgehend handwerklich hergestellt. Dabei wird ein starres Grundteil mit dem Schaumstoff belegt oder beklebt und mit einem entsprechenden Zuschnitt aus Stoff ummantelt, welcher nach allen Seiten etwas größer als das Schmuckpolster ist. Der Überstand des Stoffes wird um die seitlichen Kanten herumgezogen und unter dem starren Grundteil oder zwischen diesem und dem Schaumstoff festgeklebt. Die Form des Schmuckpolsters wird von dem starren Grundteil bestimmt. Bei flachen einfachen Polstern wird als Grundteil meist ein Kartonplättchen verwendet. Bei komplizierten plastischen Formen, wie sie für die Präsentation von Colliers oder Ohrringen üblich sind, sind entsprechend ausgeformte Grundkörper erforderlich, die üblicherweise aus Holz oder einem starren Kunststoff weitgehend handwerklich gefertigt werden.

Dieses aufwendige Herstellungsverfahren wird in der Branche für erforderlich gehalten, um das bei der Präsentation von Schmuckwaren außerordentlich wichtige ansprechende Aussehen der Schmuckpolster sicherzustellen.

In der britischen Patentschrift 1 047 671 ist ein Verfahren zur Herstellung eines Schmuckpolsters beschrieben, das den Aufwand bei der vorbekannten manuellen Herstellung vermindern soll. Dabei wird ein druckempfindlicher Klebstoff auf den Randbereich eines steifen Tragteils aufgebracht, die Polsterschicht auf den mittleren klebstofffreien Bereich des Tragteils gelegt, beides mit der textilen Deckschicht bedeckt und diese an den Klebstoffrand angedrückt, um eine Verbindung zwischen der Deckschicht und dem Tragteil herzustellen und die Polsterschicht zwischen diesen beiden Schichten einzuschließen. Hierdurch wird zwar die Herstellung vereinfacht, das Produkt genügt jedoch wegen seines flachen ungepolsterten Randes in keiner Weise den ästhetischen Ansprüchen der Schmuckbranche. Das Gewicht ist eher noch höher als bei den bekannten Schmuckpolstern.

Aus der US-Patentschrift 4 098 938 ist ein Verfahren zur Herstellung profilierter Tragteile bekannt, wie sie beispielsweise bei Transportbehältern für Musikinstrumente als an die Instrumente angepaßte Einsätze verwendet werden. Dabei bestehen die Einsatz-Tragteile aus einem mehrschichtigen Laminat mit einer die Formgebung bestimmenden Tragschicht und einer weichen Polsterschicht, die als Schaumstoffschicht und/oder Beflockung ausgebildet sein kann. Die Tragschicht besteht aus einem im wesentlichen undurchlässigen, thermoplastischen Flachmaterial, während die Schaumstoffpolsterung aus einem hitzehärtenden Polyurethanschaum besteht. Bei der Formgebung wird die Tragschicht in einen plastischen Zustand gebracht, während die Schaumstoffschicht nicht in einen plastischen Zustand kommt.

Um Präsentationspolster zur Verfügung zu stellen, die sich ohne Beeinträchtigung der Präsentationsfunktion erheblich einfacher als die vorbekannten Präsentationspolster herstellen lassen, die eine einfache Handhabung ermöglichen und die sich durch ein besonders geringes Gewicht auszeichnen, werden bei einem Schmuckpolster der eingangs bezeichneten Art die kennzeichnenden Merkmale des Anspruchs 1 vorgeschlagen.

Wegen der bedeutenden Gewichtsreduzierung ist die Erfindung vor allem für solche Präsentationsobjekte besonders geeignet, die in größeren Mengen mit entsprechenden Präsentationssets transportiert werden sollen und bei denen das Eigengewicht der Präsentationsobjekte einen relativ geringen Anteil (weniger als die Hälfte) des Gewichts konventioneller Präsentationssets ausmacht.

Das erfindungsgemäße Verfahren zur Herstellung solcher Präsentationspolster zeichnet sich dadurch aus, daß das wärmeverformbare Kunststoffmaterial erwärmt, unter Anwendung von Druck plastisch verformt und unter Aufrechterhaltung der Verformung abgekühlt wird.

Die Wärmeverformung von Schaumstoffmaterialien bzw. deren Laminaten mit anderen Materialien ist von anderen Anwendungsgebieten her grundsätzlich bekannt (US-A-3 170 832). Beispielsweise werden Formkörper für Verpackungszwecke (DE-U1-86 21 237) und Polsterteile für Möbel und Bekleidungsstücke auf diese Weise hergestellt. Das wärmeverformbare Schaumstoffmaterial wird auf eine Temperatur erwärmt, die oberhalb der Erweichungstemperatur, aber unterhalb des Schmelzbereiches liegt. Danach wird es in die gewünschte Form gebracht. Ein solcher wärmeverformter Schaumstoffartikel läßt sich daran erkennen, daß der Schaumstoff abhängig davon, wie stark er bei der Verformung komprimiert wurde, Bereiche unterschiedlicher Dichte bzw. Porosität aufweist.

Die erfindungsgemäßen Präsentationspolster sind leicht handzuhaben und dauerhaft. Die plastische Formgebung wird weitgehend durch die Wärmeverformung bestimmt. Ein formbestimmendes starres Grundteil, wie bei den vorbekannten Schmuckpolstern, ist nicht mehr erforderlich. Ein besonderer Vorteil ist das dadurch mögliche außerordentlich geringe Gewicht (etwa ein Drittel der bekannten Polster). Überraschenderweise wird dennoch eine ästhetisch außerordentlich ansprechende Gestaltung erzielt. Darüber hinaus sind die Polster angenehm weich und griffig. Schmuckstücke können mit Nadeln leicht und sicherer als bisher an den Polstern befestigt werden.

Diese Vorteile gelten in besonderem Maße für bevorzugte Ausführungsformen, wobei die im folgenden beschriebenen und in den Unteransprüchen gekennzeichneten Merkmale einzeln und in Kombination miteinander eingesetzt werden können.

Die Polsterschicht besteht vorzugsweise aus einem hochgradig aufgeschäumten, vernetzten Schaumstoffmaterial, insbesondere auf Basis von Polyethylen oder einem Polyethylen-Copolymer. Als besonders geeignet hat sich ein durch physikalische Aufschäumung eines extrudierten Kunststoffes mit Hilfe eines Inertgases hergestelltes Schaumstoffmaterial erwiesen. Ein solches Material wird unter den Markennamen "Plastazote" und "Ivazote" von der Firma BXL Plastics Limited vertrieben.

Die Dichte des Schaumstoffmaterials sollte zwischen 15 und 130, bevorzugt zwischen 20 und 70 kg/m³ liegen.

Die Oberfläche der Polsterschicht kann - wie bei den bekannten Schmuckpolstern - mit einer Deckschicht aus textilem Material abgedeckt sein. Überraschenderweise hat sich jedoch gezeigt, daß ein ansprechendes Äußeres auch erzielbar ist, wenn auf eine solche Deckschicht verzichtet wird und demzufolge die Oberfläche der Polsterschicht sichtbar ist. In diesem Fall ist es vorteilhaft, die Oberfläche mit einer Feinstrukturprägung zu versehen. Dies geschieht vorzugsweise mit Hilfe eines "Nylon-Print-Verfahrens". Dabei wird die gewünschte Feinstruktur, die vorteilhafterweise eine textile, samtartige Struktur oder eine Lederprägung nachbildet, auf photographischem Wege auf eine Nylonfolie übertragen, die in die Prägeform bei der Wärmeverformung der Schmuckpolster eingelegt wird.

Eine weitere bevorzugte Ausgestaltung sieht vor, die Oberfläche der Polster unmittelbar zu beflocken. In diesem Fall erfolgt die Wärmeverformung durch Tiefziehen, um die beflockte Oberfläche nicht zu beschädigen.

Sofern eine Deckschicht aus textilem Material verwendet wird, geschieht dies in der Weise, daß die Deckschicht mit der Polsterschicht zu einem zerstörungsfrei nicht mehr trennbaren Schichtverbund verbunden und der Schichtverbund insgesamt zu dem Schmuckpolster wärmeverformt ist. Dabei ist wichtig, daß ein in beide Flächenrichtungen elastisches textiles Material verwendet wird. Die Elastizität kann durch die Art des textilen Verbundes erzeugt sein. Insoweit erweist sich ein Gewirke als besonders geeignet. Es kann aber auch ein entsprechend elastisches Garnmaterial (z.B. aus einem Elastomer) eingesetzt werden. Die Elastizität muß so hoch sein, daß - insbesondere bei den maximal nur etwa 4 bis 6 mm dicken Schmuckpolstern in Form von rechteckigen Platten, wie sie für Anhänger und Ketten gebräuchlich sind - eine ästhetisch ansprechende Form ohne störende Krümmung des Polsters insgesamt erzielt wird. Vorzugsweise ist das Material in beide Flächenrichtungen um mindestens 10% dehnbar.

Problematisch hinsichtlich der Präsentationswirkung kann sein, daß gerade solche hochelastischen Materialien, wie sie für die Erfindung besonders bevorzugt sind, häufig dünn und optisch wenig ansprechend sind. Besonders bevorzugt ist deswegen eine Deckschicht aus einem zweilagigen Material, wobei die der Polsterschicht zugewandte Unterlage aus einem in beide Flächenrichtungen hochelastischen Grundmaterial (Gewirke oder Elastomer) besteht, während die Oberlage optisch so dicht ist, daß die Unterlage nicht sichtbar ist. Dadurch wird in idealer Weise hohe Elastizität und ein den Erfordernissen der Schmuckbranche entsprechendes Äußeres verbunden.

Der Schichtverbund aus Deckschicht und Polsterschicht läßt sich nicht beschädigungsfrei trennen. Vorzugsweise sind beide Schichten vollflächig miteinander verbunden, wobei der Schichtverbund zweckmäßigerweise durch Kleben hergestellt wird.

Als Kleber eignet sich beispielsweise ein Schmelzkleber oder Kontaktkleber.

Die Temperatur des Schichtverbunds beim Prägevorgang beträgt vorzugsweise mehr als 140°C. Selbstverständlich muß auch das Material der Klebstoffschicht auf diese Temperatur abgestimmt sein. Im Falle der Verwendung eines Kontaktklebers muß er ausreichend temperaturbeständig sein, daß er sich bei der Erhitzung nicht zersetzt. Eine gewisse Erweichung des Klebers durch das Erhitzen ist dagegen unschädlich. Im Falle des Schichtverbundes kann sich sogar eine besonders gute Verbindung der Schichten miteinander durch die Einwirkung von Wärme und Druck bei der Wärmeverformung ergeben.

Die Verformung des wärmeverformbaren Schaumstoffs zu dem Schmuckpolster erfolgt vorzugsweise durch Prägen. Dabei kann der Schaumstoff bzw. der Schichtverbund mit der textilen Deckschicht auf eine ebene Fläche aufgelegt und mit einer einteiligen Prägeform verformt werden. Soll auch die Unterseite in ein bestimmtes Profil gebracht werden, so verwendet man eine zweiteilige Prägeform, wobei beide Formhälften dreidimensional plastisch ausgeformt sind und die untere Formhälfte die Form der Unterseite des Schmuckpolsters bestimmt, während die Oberseite des Schmuckpolsters durch die obere Formhälfte bestimmt wird. Mindestens eine der Formhälften sollte Entlüftungskanäle aufweisen. Damit sind völlig neuartige Formgebungen von Schmuckpolstern - insbesondere bei Ohrringpolstern - möglich.

Wie erwähnt, soll das Abkühlen des Schaumstoffs bzw. Schichtverbundes unter Aufrechterhaltung der Verformung geschehen. Zweckmäßigerweise kühlt man die Prägeform auf eine Temperatur unterhalb der Erweichungstemperatur des thermoplastischen Schaumstoffmaterials. Dadurch läßt sich ein rasches und definiertes "Einfrieren" der Form erreichen.

Die geprägten Schmuckpolster können im Anschluß an den zweiten Verfahrensschritt mit einem scharfkantigen Stanzwerkzeug ausgestanzt, um einen sauberen Rand zu erhalten. Die dabei erzielte Maßhaltigkeit wird hohen Anforderungen gerecht.

Vorzugsweise ist die Polsterschicht im Bereich des Randes des Polsters derartig verformt, daß ihre Schichtstärke zum Rand hin kontinuierlich abnimmt, wobei die Oberseite der Polsterschicht konvex nach unten gekrümmt ist. Bei der Herstellung eines derartig geformten Schmuckpolsters aus wärmeverformbarem Kunststoff wird dieser am Rand stark komprimiert und dadurch verfestigt. Der Rand läuft in einer schmalen spitzen Linie aus, die griffgünstig ist und dem Polster sehr gute Handhabungseigenschaften verleiht. Zudem ist diese Formgebung besonders vorteilhaft in Verbindung mit dem im folgenden erläuterten Schmuckpräsentationsset.

Bei einem erfindungsgemäßen Schmuckpräsentationsset sind die Schmucklade und insbesondere ihre Ladenfläche, welche mit Stegen in eine Mehrzahl von Feldern unterteilt ist, und die Schmuckpolster in besonderer Weise aufeinander abgestimmt. Dabei werden die zuvor beschriebenen Schmuckpolster aus wärmeverformten Schaumstoff verwendet.

Die wechselseitige Abstimmung von Schmuckpolster und -lade umfaßt zwei Maßnahmengruppen.

Zum einen sind die Flächendimensionen der Schmuckpräsentationspolster etwas größer als die entsprechenden Flächendimensionen der Felder. Die Schmuckpolster sind in Richtung parallel zu ihrer Oberfläche zu ihrer Mitte hin geringfügig elastisch komprimierbar. Dadurch drücken die Kanten des Schmuckpolsters jeweils gegen die ihm Zugewandten inneren Begrenzungswände der Stege.

Zum zweiten wird durch besondere Gestaltung der den Schmuckpolstern zugewandten Begrenzungswände der Stege ein fester Sitz der Schmuckpolster in den Feldern gewährleistet. Dies kann dadurch erreicht werden, daß die Stege einen von der Ladenfläche nach oben hin zunehmenden Querschnitt haben, so daß ihre den Feldern zugewandten Begrenzungswände zu den Feldern hin geneigt sind. Diese Maßnahme ist bei einer anderen Präsentationsset-Konstruktion, die aus einem Gitterrahmen und aus einem harten Styrol-Kunststoffmaterial hergestellten Einsatzelementen besteht, bekannt (US-Patent 4 432 456). Alternativ oder zusätzlich können die Begrenzungswände ein haftungserhöhende Beschichtung, insbesondere eine Beflockung aufweisen.

Bei einem so ausgebildeten Schmuckpräsentationsset sitzen die Polster in den Feldern derartig fest, daß sie beim Transport des Präsentationsset nicht herausfallen können. Dies gilt selbst dann, wenn darauf Schmuckstücke befestigt sind und die Schmucklade mit den Schmuckpolstern und den Schmuckstücken senkrechtgestellt oder sogar herumgedreht wird. Dies bedeutet einen außerordentlich wertvollen Handhabungsvorteil, insbesondere für reisende Vertreter der Schmuckbranche. Von besonderem Vorteil ist dabei, daß viele Schmuckstücke sich in den erfindungsgemäßen Polstern durch einfaches Einstecken einer Nadel gut fixieren lassen, während sie den bekannten Schmuckpolstern vielfach angenäht werden mußten.

Die Erfindung wird im folgenden anhand eines in den Figuren schematisch dargestellten Ausführungsbeispiels näher erläutert; es zeigen:
- Fig. 1: ein erfindungsgemäßes Schmuckpolster in perspektivischer Ansicht;
- Fig. 2: einen Schnitt entlang der Linie II-II in Fig.1;
- Fig. 3: eine Detaildarstellung aus Fig. 2;
- Fig. 4: eine Detaildarstellung entsprechend Fig. 3 von einer alternativen Ausführungsform;
- Fig. 5: eine perspektivische Ansicht eines Präsentationsset;
- Fig. 6: einen Schnitt entlang der Linie VI-VI in Fig. 5
- Fig. 7: eine Schnittdarstellung einer alternativen Ausführungsform;
- Fig. 8: eine Schnittdarstellung einer zweilagigen Deckschicht;
- Fig. 9: eine perspektivische Ansicht eines Schmuckpolsters für Ohrringe;
- Fig. 10: eine Aufsicht auf ein Ohrringpolster gemäß Fig. 9;
- Fig. 11: einen Schnitt entlang der Linie XI-XI in Fig. 10;
- Fig. 12: einen Schnitt durch eine weitere Ausführungsform eines Präsentationsset.

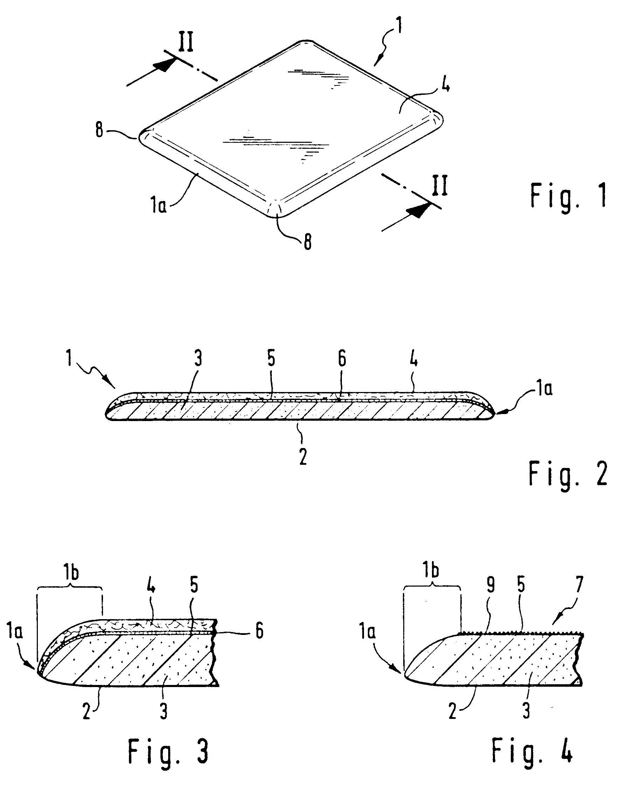

Die Figuren 1 bis 3 zeigen ein einfaches flaches Schmuckpolster 1. Es besteht aus einer der Unterseite 2 zugewandten Polsterschicht 3 und einer die Oberseite 5 bedeckenden Deckschicht 4. Sie sind durch eine Kleberschicht 6 miteinander verbunden.

Einzelheiten sind in Fig. 3 deutlicher zu erkennen. In dem mit 1b bezeichneten Randbereich des Schmuckpolsters 1 nimmt die Schichtstärke der Polsterschicht 3 zum Rand 1a hin kontinuierlich ab. Dies wird überwiegend nicht durch Spannungen in den Schichten erreicht, sondern durch die plastische Verformung der Schaumstoffschicht während des oben beschriebenen Herstellungsvorgangs. Dabei ist -wie dargestellt- die Oberseite der Polsterschicht und die Kleberschicht konvex nach unten gekrümmt. Demgegenüber verläuft die Unterseite 2 der Polsterschicht 3 bis zum Rand 1a hin weitgehend eben. Lediglich unmittelbar vor dem Rand 1a entsteht eine leichte konvexe Krümmung nach oben. Hierdurch wird das optische Erscheinungsbild und der praktische Gebrauch des Schmuckpolsters 1 jedoch nicht beeinträchtigt. Im Gegenteil erleichtert die geringfügige Aufwölbung das Herausnehmen des Schmuckpolsters aus einer entsprechenden Schmucklade, ohne daß andererseits die plane Auflage der Unterseite beeinträchtigt wird.

Für Haltbarkeit und praktischen Gebrauch hat es sich als vorteilhaft erwiesen, wenn die Ecken 8 des Schmuckpolsters mit einem verhältnismäßig großen Krümmungsradius abgerundet sind. Dieser sollte mindestens 1mm, besonders bevorzugt mindestens 2mm betragen.

In Fig. 4 ist ausschnittsweise eine Ausführungsform eines Schmuckpolsters 7 dargestellt, bei der die Polsterschicht 3 nicht mit einer Deckschicht abgedeckt, ihre der Oberseite 5 zugewandte Oberfläche also sichtbar ist. Sie ist vorzugsweise, wie oben erläutert, mit einer Feinstrukturprägung 9 versehen. Der Rand 1a läuft spitz zu. Durch die hohe Kompression beim Prägevorgang wird das Schaumstoffmaterial hier verfestigt, wodurch (ohne Beeinträchtigung des ästhetischen Erscheinungsbildes) die Handhabungseigenschaften verbessert werden. Die Verfestigung ist überwiegend darauf zurückzuführen, daß die Schaumstoffporen im äußersten Randbereich durch Einwirkung von Druck und Temperatur geschlossen (verschweißt) werden.

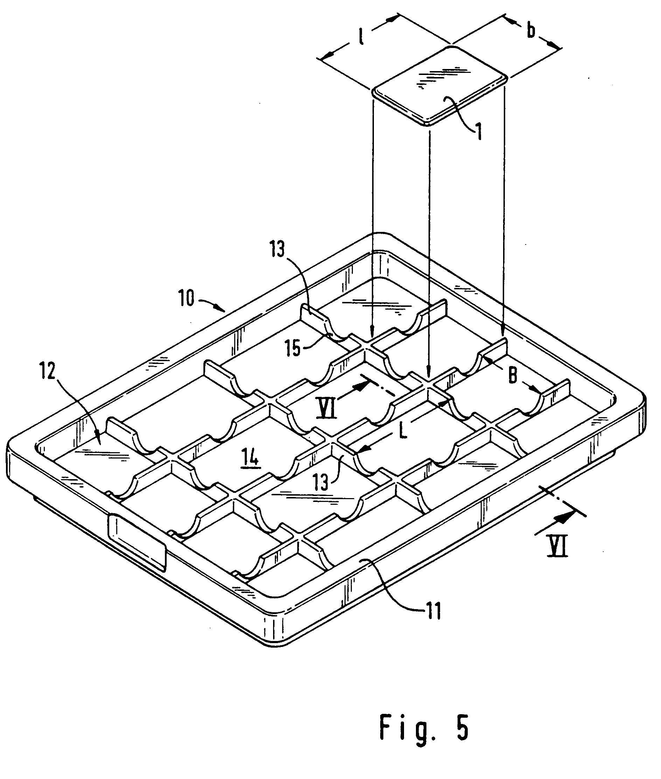

Das in Fig. 5 dargestellte Schmuckpräsentationsset besteht aus einer Schmucklade 10 und Schmuckpolstern 1, von denen nur eines dargestellt ist.

Die Schmucklade 10 hat eine von einem Rand 11 umgebene Ladenfläche 12, welche durch erhabene Stege 13 in eine Vielzahl von Feldern 14 aufgeteilt ist.

Die Schmuckpolster 1 lassen sich dank ihrem griffgünstigen Rand 1a besonders einfach in die Lade 10 einsetzen bzw. aus dieser herausnehmen. Auf eine spezielle Herausnehmehilfe, insbesondere eine entsprechende Schlaufe, kann ganz verzichtet werden. Statt dessen haben die Stege 13 der Schmucklade Griffausnehmungen 15, welche vorzugsweise bis auf das Niveau der Ladenfläche 12 (Bodenfläche der Felder 14) heruntergehen.

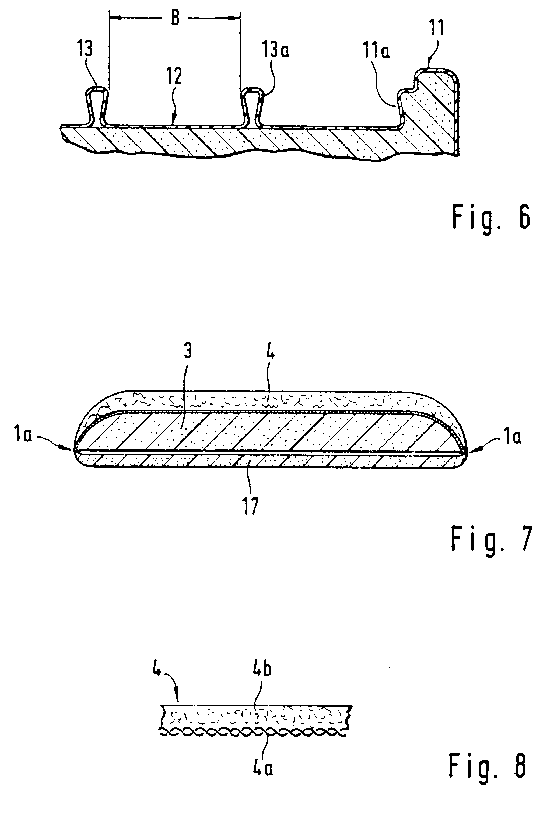

Vorzugsweise haben die Stege 13 der Felder 14 einen von der Ladenfläche 12 nach oben zunehmenden Querschnitt, wie in Fig. 6 übertrieben dargestellt ist. Auch die Innenseiten 11a des Randes 11 der Lade sind entsprechend ausgebildet. Die Breite B und Länge L der Felder 14 auf der Höhe des größten Querschnitts 13a der Stege 13 ist geringfügig (vorzugsweise ca 0,5 bis 1,5 mm) geringer als der maximale Abstand in der Höhe des minimalen Stegquerschnitts in der Nähe der Bodenfläche 12. Die zugehörigen, speziell auf eine solche Lade abgestimmten Schmuckpolster 1 sind nicht nur senkrecht zu ihrer Oberfläche, sondern auch in Flächenrichtung (also in Richtung auf den Rand 1a) elastisch deformierbar. Zweckmäßigerweise sind ihre Abmessungen (Länge l und Breite b) in Flächenrichtung im nicht komprimierten Ausgangszustand geringfügig (vorzugsweise 0,2 bis 0,5 mm) größer als die Länge und Breite der Felder 14 auf der Höhe des größten Stegquerschnitts 13a. Dadurch sitzen in die Felder 14 eingesetzte Schmuckpolster 1 in einem elastischen Paßsitz fest, so daß sie, wie oben erwähnt, beim Transport des Präsentationsset 1,10 nicht herausfallen können.

Fig. 7 zeigt eine Ausführungsform des Schmuckpolsters mit einer zusätzlichen Unterschicht 17, die aus einem Schaumstoffmaterial besteht, welches eine höhere Dichte als das Schaumstoffmaterial der Polsterschicht hat. Bevorzugt ist eine Dichte zwischen 50 und 130 kg/m³. Die Polsterschicht 3 ist mit der Unterschicht 17 nicht verklebt. Vielmehr wird die Verbindung beider Schichten nur dadurch hergestellt, daß sie während der Wärmeverformung am Rand 1a aneinander haften. Überraschenderweise ist diese Verbindung ohne zusätzliche Maßnahmen ausreichend dauerhaft. Die zusätzliche Unterschicht 17 aus einem Schaumstoffmaterial höherer Dichte erhöht die Steifigkeit des Schmuckpolsters so, daß auch verhältnismäßig große flache Schmuckpolster mit einer Längsabmessung von mehr als 8 cm mit einer ausreichenden Steifigkeit und geringem Gewicht hergestellt werden können.

Fig. 8 verdeutlicht den bevorzugten zweilagigen Aufbau der Deckschicht 4 aus einer in beide Flächenrichtungen hochelastischen, vorzugsweise gewirkten, Unterlage 4a und einer optisch undurchsichtigen Oberlage 4b. Die Oberlage 4b ist bevorzugt eine Beflockung.

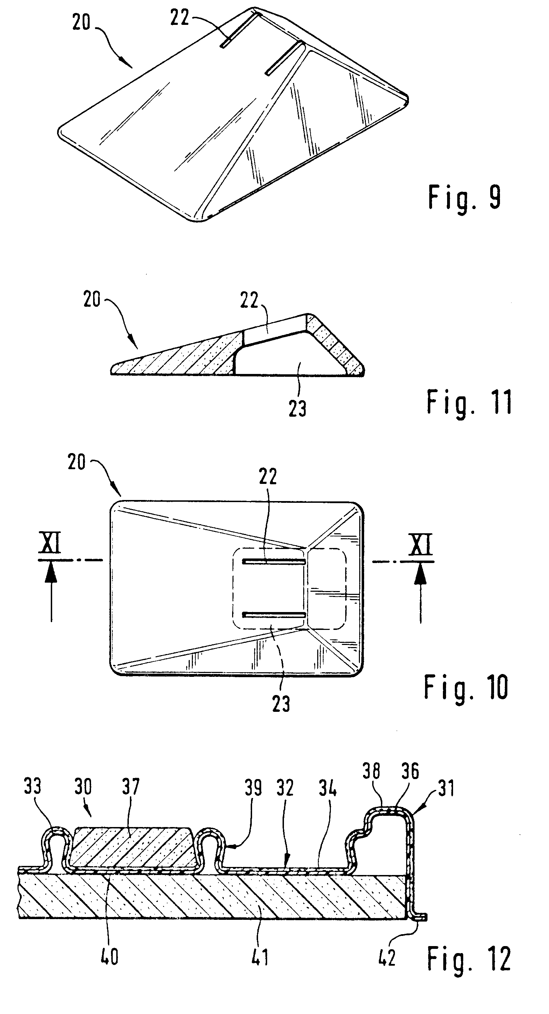

Fig. 9 bis 11 zeigen ein Ohrringpolster 20 mit einer für derartige Polster charakteristischen Formgebung mit schräg aufeinander zulaufenden Flächen. Man erkennt, daß auch verhältnismäßig komplizierte Formen mit großen Dickevariationen hergestellt werden können. Zur Halterung der Ohrringe dienen vorzugsweise einfache Schlitze 22, die beim Ausstanzen der Schmuckpolster gleichzeitig eingeschnitten werden.

Zur Herstellung stark profilierter Schmuckpolster mit großen Dickeunterschieden ist es zweckmäßig, Prägeformen zu verwenden, die auf der Unterseite im wesentlichen parallel zu der oberen Hälfte der Prägeform verlaufen. Dadurch entstehen Schmuckpolster mit einem Hohlraum 23 auf der Unterseite der im dargestellten Fall zur Aufnahme des Befestigungsteils der Ohrringe dient. Überraschenderweise zeigt sich, daß bei verhältnismäßig kleinen Abmessungen, wie den dargestellten Ohrringpolstern die Steifigkeit der wärmeverformten Polsterschicht 3 so hoch ist, daß keine zusätzliche Unterschicht im Bereich des Hohlraums 23 verwendet werden muß.

Solche Ohrringpolster sind universell für eine Vielzahl verschiedener Ohrringkonstruktionen einsetzbar, während die bekannten Ohrringpolster meist speziell auf die jeweilige Ohrringmechanik abgestimmt sein mußten.

Das in Fig. 12 im Querschnitt dargestellte Präsentationsset, bestehend aus einer Schmucklade 30 und einem Schmuckpolster 37, ist weitgehend wie das in den Figuren 5 und 6 dargestellte Set ausgebildet. Es weist jedoch einige Besonderheiten auf.

Die Ladenfläche 32 einschließlich der Stege 33, die die Felder 34 abteilen, ist in einen Folienkörper 36 eingeprägt. Der Folienkörper 36 ist das tragende Element der Schmucklade 30 und besteht aus einem vorzugsweise tiefgezogenen thermoplastischen Kunststoffmaterial mit einer Stärke zwischen etwa 0,6 mm und etwa 1 mm.

Ein Paßsitz der Schmuckpolster 37 in den Feldern 34 kann durch die im Zusammenhang mit Fig. 6 beschriebene Formgebung der Stege 33 erreicht werden. Vorzugsweise ist statt der nach oben erweiterten Querschnittsform oder zusätzlich zu dieser eine haftungserhöhende Beschichtung 38 vorgesehen, welche zumindest die den Feldern 34 zugewandten Begrenzungswände 39 bedeckt. Sie kann beispielsweise in einer Beflockung oder in einer verhältnismäßig rauhen Strukturprägung der Oberfläche des Folienkörpers 36 bestehen.

An der Unterseite 40 des Kunststoffolienkörpers 36 ist eine Schaumstoffschicht 41, vorzugsweise durch Kleben, befestigt. Ihre Dicke ist vorzugsweise so bemessen, daß sie mit der unteren Begrenzung 42 des Randes 31 bündig abschließt oder geringfügig (maximal etwa 2 mm) gegenüber dieser zurückspringt. Das Material der Schaumstoffschicht 41 ist relativ weich, jedenfalls weicher als das Schaumstoffmaterial der Schmuckpolster 37.

Diese Ausführungsform der Erfindung ist in besonderem Maße für Verpackung und Transport großer Mengen von Schmuckstücken geeignet. Dabei wurden bisher überwiegend ein oder mehrere Schmuckstücke an Schmuckpolstern der bekannten Art befestigt und diese lose als Stapel verpackt und transportiert. Dies führte zu einer schlechten Übersichtlichkeit und unpraktischen Handhabung, wurde jedoch für erforderlich gehalten, um viele Schmuckstücke auf kleinem Raum verpacken und transportieren zu können.

Bei der in Verbindung mit Fig. 12 beschriebenen Ausführungsform der Erfindung wird eine wesentlich verbesserte Übersichtlichkeit und Handhabung erreicht, ohne daß die Herstellungskosten oder das Verpackungsvolumen erhöht werden. Die Polster 37 sind vorzugsweise nur aus wärmeverformbarem Schaumstoff ohne textile Deckschicht gefertigt und deswegen besonders leicht und kostengünstig. Durch eine besonders feine Strukturprägung ist es möglich, Etiketten zur Bezeichnung der einzelnen Schmuckstücke mit üblichen Etikettiermaschinen unmittelbar auf den Polstern 37 zu befestigen. Die Schmuckstücke werden einfach und rationell in die bereits in die Lade 30 eingesetzten Schmuckpolstern 37 eingesteckt.

Die Bauhöhe der Lade 30 einschließlich der Polster 37 ist in der Figur übertrieben dargestellt. In der Praxis liegt sie zweckmäßigerweise in der Größenordnung von etwa 1 cm, wobei die Höhe der Stege vorzugsweise etwa 3 bis 4 mm beträgt. Durch diese flache Bauweise ergibt sich eine hohe Packungsdichte der Schmuckstücke. Zugleich werden sie zuverlässig festgehalten. Wenn man mehrere Schmuckpräsentationssets aufeinander stapelt, drücken sich die Schmuckstücke in die Schaumstoffschicht des jeweils darüberliegenden Präsentationsset.

## Patentansprüche

1. Präsentationspolster (1,7,20) mit einer Polsterschicht (3) aus elastischem Schaumstoff,
**dadurch gekennzeichnet**, daß
die Polsterschicht (3) aus einem elastischen, wärmeverformbaren Schaumstoff zu einem Formkörper entsprechend der Form des Polsters (1,7,20) wärmeverformt ist, welcher abhängig vom Grad der Verformung Bereiche unterschiedlicher Porosität aufweist, so daß die plastische Formgebung des Formkörpers weitgehend durch die Wärmeverformung des Schaumstoffs bestimmt ist.

2. Präsentationspolster nach Anspruch 1, **dadurch gekennzeichnet**, daß die Polsterschicht (3) aus einem hochgradig aufgeschäumten, vernetzten Schaumstoffmaterial auf Basis von Polyethylen oder einem Polyethylen-Copolymer besteht.

3. Präsentationspolster nach Anspruch 1 oder 2, **dadurch gekennzeichnet**, daß die Polsterschicht (3) aus einem Schaumstoffmaterial mit einer Dichte zwischen 15 und 130 kg/m³, bevorzugt zwischen 20 und 70 kg/m³ besteht.

4. Präsentationspolster nach einem der vorhergehenden Ansprüche, **dadurch gekennzeichnet**, daß die Polsterschicht (3) im Bereich (1b) des Randes (1a) des Polsters derartig komprimiert ist, daß ihre Schichtstärke zum Rand (1a) hin kontinuierlich abnimmt, wobei die Oberseite (5) der Polsterschicht (3) konvex nach unten gekrümmt und der Rand (1a) des Polsters verfestigt ist.

5. Präsentationspolster nach einem der vorhergehenden Ansprüche, **dadurch gekennzeichnet**, daß die Oberfläche der Oberseite (5) der Polsterschicht (3) sichtbar und mit einer Feinstrukturprägung (9) versehen ist.

6. Präsentationspolster nach einem der vorhergehenden Ansprüche, **dadurch gekennzeichnet**, daß die Oberfläche der Oberseite (5) der Polsterschicht (3) beflockt ist.

7. Präsentationspolster nach einem der vorhergehenden Ansprüche, **dadurch gekennzeichne**t, daß es eine seine Oberseite (5) bedeckende Deckschicht (4) aus textilem Material aufweist, die Deckschicht (4) mit der Polsterschicht (3) zu einem Schichtverbund verbunden ist und der Schichtverbund insgesamt zu dem Schmuckpolster wärmeverformt ist.

8. Präsentationspolster nach Anspruch 7, **dadurch gekennzeichnet**, daß die Deckschicht (4) ein in beiden Flächenrichtungen elastisches textiles Material, insbesondere ein Gewirke enthält.

9. Präsentationspolster nach Anspruch 7 oder 8, **dadurch gekennzeichnet**, daß die Deckschicht (4) mehrlagig ist mit einer Unterlage (4a) aus dem in beiden Flächenrichtungen elastischen Material und einer Oberlage (4b), welche optisch so dicht ist, daß die Unterlage (4a) nicht sichtbar ist.

10. Präsentationspolster nach einem der Ansprüche 7 bis 9, **dadurch gekennzeichnet**, daß die Deckschicht (4) und die Polsterschicht (3) mit einem Kleber (6) verklebt sind.

11. Präsentationspolster nach einem der vorhergehenden Ansprüche, **dadurch gekennzeichnet**, daß auf seiner Unterseite (2) eine zusätzliche Unterschicht (17) vorgesehen ist, welche aus einem Schaumstoffmaterial besteht, das eine höhere Dichte als das Schaumstoffpolster der Polsterschicht (3) hat.

12. Verfahren zur Herstellung von Präsentationspolstern nach einem der vorhergehenden Ansprüche, **dadurch gekennzeichnet**, daß das wärmeverformbare Schaumstoffmaterial erwärmt, unter Anwendung von Druck plastisch verformt und unter Aufrechterhaltung der Verformung abgekühlt wird.

13. Verfahren nach Anspruch 12, **dadurch gekennzeichnet**, daß die plastische Verformung mit einer Prägeform erfolgt.

14. Verfahren nach Anspruch 13, **dadurch gekennzeichnet**, daß eine zweiteilige Prägeform mit einer oberen und einer unteren Formhälfte verwendet wird, bei der beide Formhälften plastisch ausgeformt sind.

15. Verfahren nach einem der Ansprüche 12 bis 14, **dadurch gekennzeichnet**, daß das wärmeverformbare Schaumstoffmaterial in einem ersten Verfahrensschritt mit einer textilen Deckschicht zu einem Schichtverbund verbunden und der Schichtverbund in einem zweiten Verfahrensschritt unter Anwendung von Druck plastisch verformt und unter Aufrechterhaltung der Verformung abgekühlt wird.

16. Präsentationsset, bestehend aus einer Präsentationslade (10,30) mit einer Ladenfläche (12), welche mit Stegen (13) in eine Mehrzahl von Feldern (14) unterteilt ist, und nach einem der Ansprüche 1 bis 11 ausgebildeten Präsentationspolstern, deren Flächendimensionen (b,l) auf die entsprechenden Dimensionen (B,L) der Felder (14) abgestimmt sind, **dadurch gekennzeichnet**, daß die Stege (13) einen von der Ladenfläche (12) nach oben hin zunehmenden Querschnitt haben und die Flächendimensionen (b,l) der Präsentationspolster (1,7) etwas größer als die entsprechenden Flächendimensionen (B,L) der Felder (14) auf der Höhe des größten Querschnitts (13a) der Stege (13) sind.

17. Präsentationsset, bestehend aus einer Schmucklade (10,30) mit einer Ladenfläche (12), welche mit Stegen (13) in eine Mehrzahl von Feldern (14) unterteilt ist, und nach einem der Ansprüche 1 bis 11 ausgebildeten Präsentationspolstern, deren Flächendimensionen (b,l) auf die entsprechenden Dimensionen (B,L) der Felder (14) abgestimmt sind, insbesondere nach Anspruch 16, **dadurch gekennzeichnet**, daß die den Feldern (34) zugewandten Begrenzungswände (39) der Stege (34) eine haftungserhöhende Beschichtung (38) aufweisen, und die Flächendimensionen (b,l) der Präsentationspolster (1,7) etwas größer als die entsprechenden Flächendimensionen (B,L) der Felder (14) sind.

18. Präsentationsset nach Anspruch 17, **dadurch gekennzeichnet**, daß die Beschichtung (38) eine Beflockung ist.

19. Präsentationsset nach einem der Ansprüche 16 bis 18, **dadurch gekennzeichnet**, daß die Schmucklade einen Kunststoffolienkörper (36) aufweist, in den die Ladenfläche (32) einschließlich der Stege (33) eingeprägt ist.

20. Präsentationsset nach einem der Ansprüche 16 bis 19, **dadurch gekennzeichnet**, daß an der Unterseite (40) der Schmucklade (30) im Bereich der Ladenfläche (12) eine Schaumstoffschicht (41) vorgesehen ist, die eine höhere elastische Verformbarkeit als das Schaumstoffmaterial der Präsentationspolster (37) hat.

## Claims

1. Display cushion (1, 7, 20) with a cushion layer (3) of elastic foamed material,
**characterized in** that
the cushion layer (3) is hot-formed from an elastic, hot-formable foamed synthetic resin material to produce a moulding corresponding to the shape of the cushion (1, 7, 20), which body, depending on the degree of deformation, comprises regions of different porosity, so that the plastic shaping of the moulding is largely determined by the hot-forming of the foamed material.

2. Display cushion according to Claim 1, **characterized in** that the cushion layer (3) consists of a highly-foamed crosslinked foamed material based on polyethylene or a polyethylene copolymer.

3. Display cushion according to Claim 1 or 2, **characterized in** that the cushion layer (3) consists of a foamed material having a density of between 15 and 130 kg/m³, preferably between 20 and 70 kg/m³.

4. Display cushion according to one of the preceding claims, **characterized in** that the cushion layer (3) is compressed in the region (1b) of the edging (1a) of the cushion in such a way that its layer thickness decreases continuously towards the edging (1a), the top surface (5) of the cushion layer (3) being curved downwards in a convex shape and the edging (1a) of the cushion being hardened.

5. Display cushion according to one of the preceding claims, **characterized in** that the surface of the top (5) of the cushion layer (3) is visible and is provided with a finely structured embossing (9).

6. Display cushion according to one of the preceding claims, **characterized in** that the surface of the top (5) of the cushion layer (3) is flocked.

7. Display cushion according to one of the preceding claims, **characterized in** that it comprises a skin (4) of textile material covering its top (5), the skin (4) is bonded with the cushion layer (3) to form a layered composite structure and the layered composite structure as a whole is hot-formed to form the jewellery cushion.

8. Display cushion according to Claim 7, **characterized in** that the skin (4) contains a textile material, especially a knitted fabric, which is elastic in both surface directions.

9. Display cushion according to Claim 7 or 8, **characterized in** that the skin (4) is multi-layered with a bottom layer (4a) of the material which is elastic in both surface directions and an upper layer (4b) which is optically so dense that the bottom layer (4a) is not visible.

10. Display cushion according to any one of Claims 7 to 9, **characterized in** that the skin (4) and the cushion layer (3) are cemented together with an adhesive (6).

11. Display cushion according to any one of the preceding claims, **characterized in** that there is provided on its bottom surface (2) an additional bottom layer (17) which consists of a foamed material which has a higher density than the foamed-material cushion of the cushion layer (3).

12. Process for manufacturing display cushions according to any one of the preceding claims, **characterized in** that the hot-formable foamed material is heated, plastically deformed with application of pressure and cooled down with maintenance of the deformation.

13. Process according to Claim 12, **characterized in** that the plastic deformation is carried out with an embossing matrix.

14. Process according to Claim 13, **characterized in** that use is made of a two-part embossing matrix with an upper and a lower form matrix-half, both matrix-halves being relief-shaped.

15. Process according to any one of Claims 12 to 14, **characterized in** that the hot-formable foamed material, in a first process step, is bonded with a textile skin to form a layered composite structure and, in a second process step, the layered composite structure is plastically deformed with application of pressure and cooled down with maintenance of the deformation.

16. Display set consisting of a display tray (10, 30) with a tray surface (12) which is divided by crosspieces (13) into a plurality of compartments (14) and of display cushions shaped according to any one of Claims 1 to 11 whose surface dimensions (b, l) are matched to the corresponding dimensions (B, L) of the compartments (14), **characterized in** that the crosspieces (13) have a cross-section increasing from the tray surface (12) upwards and the surface dimensions (b, l) of the display cushions (1, 7) are somewhat greater than the corresponding surface dimensions (B, L) of the compartments (14) at the height where the cross-section (13a) of the crosspieces (13) is greatest.

17. Display set consisting of a display tray (10, 30) with a tray surface (12) which is divided by crosspieces (13) into a plurality of compartments (14) and of display cushions shaped according to any one of Claims 1 to 11 whose surface dimensions (b, l) are matched to the corresponding dimensions (B, L) of the compartments (14), especially according to Claim 16, **characterized in** that the limiting walls (39) of the crosspieces (34) facing towards the compartments (34) have an adhesion-increasing coating (38) and the surface dimensions (b, l) of the display cushions (1, 7) are somewhat greater than the corresponding surface dimensions (B, L) of the compartments (14).

18. Display set according to Claim 17, **characterized in** that the coating (38) is a flocking.

19. Display set according to any one of claims 16 to 18, **characterized in** that the jewellery tray comprises a plastic sheeting body (36) into which the tray surface (32) including the crosspieces (34) is embossed.

20. Display set according to any one of Claims 16 to 19, **characterized in** that there is provided on the bottom (40) of the jewellery tray (30) in the region of the tray surface (12) a foamed-material layer (41) which has a higher elastic deformability than the foamed material of the display cushion (37).

## Revendications

1. Coussin-présentoir (1,7,20) comportant une couche de rembourrage (3) en mousse élastique,
**caractérisé en ce que**
la couche de rembourrage (3), obtenue à partir d'une mousse élastique thermoformable, est formée à chaud en une pièce moulée dont la forme correspond à celle du coussin-présentoir (1,7,20) et qui présente des zones de porosité différentes en fonction du degré de déformation subie, de sorte que la configuration de cette pièce moulée est déterminée dans une large mesure par la déformation subie par la mousse élastique sous l'action de la chaleur.

2. Coussin-présentoir selon la revendication 1, **caractérisé en ce que** la couche de rembourrage (3) consiste en un matériau cellulaire réticulé et fortement moussé à base de polyéthylène ou d'un copolymère de polyéthylène.

3. Coussin-présentoir selon l'une quelconque des revendications 1 ou 2, **caractérisé en ce que** la couche de rembourrage (3) consiste en une mousse d'une masse volumique comprise entre 15 et 130 kg/m³, de préférence entre 20 et 70 kg/m³.

4. Coussin-présentoir selon l'une des revendications ci-avant, **caractérisé en ce que** la couche de rembourrage (3) dans la zone (1b) du bord (1a) du coussin est comprimée de telle sorte qu'elle diminue de façon continue en épaisseur jusqu'au bord (1a), et que ce faisant, la face supérieure (5) de la couche de rembourrage (3) s'incurve vers le bas de façon convexe et le bord (1a) du coussin est solidifié.

5. Coussin-présentoir selon l'une des revendications ci-avant, **caractérisé en ce que** la surface de la face supérieure (5) de la couche de rembourrage (3) est visible et dotée d' une structure finement grainée (9).

6. Coussin-présentoir selon l'une des revendications ci-avant, **caractérisé en ce que** la face supérieure (5) de la couche de rembourrage est floquée.

7. Coussin-présentoir selon l'une des revendications ci-avant, **caractérisé en ce qu**'il présente une couche de recouvrement (4) en un matériau textile recouvrant sa face supérieure, que la couche de recouvrement (4) est solidaire de la couche de rembourrage (3) pour former un ensemble composite, cet ensemble composite étant thermoformé pour conformer le coussin-présentoir qui fait office d'écrin.

8. Coussin-présentoir selon la revendication 7, **caractérisé en ce que** la couche de recouvrement (4) comporte un matériau textile élastique dans les deux dimensions de la surface, en particulier un tricot.

9. Coussin-présentoir selon l'une quelconque des revendications 7 ou 8, **caractérisé en ce que** la couche de recouvrement (4) est constituée par plusieurs couches dont une couche de base (4a) fabriquée dans ledit matériau élastique dans les deux dimensions de la surface, et une couche supérieure (4b) dont la densité optique est si élevée que la base (4a) n'est pas visible.

10. Coussin-présentoir selon l'une quelconque des revendications 7 à 9, **caractérisé en ce que** la couche de recouvrement (4) est rendue solidaire de la couche de rembourrage (3) par collage au moyen d'un adhésif.

11. Coussin-présentoir selon l'une des revendications ci-avant, **caractérisé en ce que** sa surface inférieure (2) présente une couche de base supplémentaire fabriquée dans une mousse dont la masse volumique est supérieure à celle de la mousse de la couche de rembourrage (3).

12. Procédé pour la fabrication de coussins-présentoirs selon l'une des revendications ci-avant, **caractérisé en ce que** le matériau de mousse thermoformable est chauffé, subit une déformation plastique par application de pression et est refroidi tout en conservant la conformation prise.

13. Procédé selon la revendication 12, **caractérisé en ce que** la déformation plastique est pratiquée au moyen d'un moule de gaufrage.

14. Procédé selon la revendication 13, **caractérisé en ce qu**'on utilise un moule de gaufrage comportant une partie supérieure et une partie inférieure, les deux parties ayant une conformation plastique.

15. Procédé selon l'une quelconque des revendications 12 à 14, **caractérisé en ce que** le matériau de mousse thermoformable est rendu solidaire au cours d'une première étape de process d'une couche de recouvrement textile pour former un ensemble composite et que cet ensemble composite subit dans une seconde étape une déformation plastique par application de pression et est refroidi tout en conservant la conformation prise.

16. Set de présentation constitué par un plateau d'étalage (10,30) avec un fond (12) subdivisé en un grand nombre de casiers (14) par des traverses (13) et par des coussins-présentoirs exécutés selon l'une des revendications 1 à 11, dont les dimensions de surface (b,l) matérialisent les dimensions (B,L) des casiers (14), **caractérisé en ce que** les traverses (13) ont des sections qui, partant du fond (12) vont augmentant vers le haut, et les dimensions de surface (b,l) des coussins-présentoirs (1,7) sont légèrement supérieures aux dimensions de surface correspondantes (B,L) des casiers (14), rapportées à hauteur de la section la plus grande (13a) des traverses (13).

17. Set de présentation, constitué par un plateau d'étalage (10,30) avec un fond (12) subdivisé en un grand nombre de casiers (14) par des traverses (13) et par des coussins-présentoirs selon l'une des revendications 1 à 11 dont les dimensions de surface (b,l) matérialisent les dimensions de surface (B,L) des casiers (14), notamment selon la revendication 16, **caractérisé en ce que** les parois de délimitation (39) des traverses (33) tournées vers les casiers (34) ont une enduction (38) qui augmente leur adhésion, et les dimensions de sur-face (b,l) des coussins-présentoirs (1,7) sont légèrement supérieures aux dimensions de surface (B,L) des casiers (14).

18. Set de présentation selon la revendication 17, **caracérisé en ce que** l'enduction (38) est un flocage.

19. Set de présentation selon l'une quelconque des revendications 16 à 18, **caractérisé en ce que** le plateau d'étalage présente un corps en une feuille plastique (36) dans lequel sont empreints le fond du plateau (32) y compris les traverses (33).

20. Set de présentation selon l'une quelconque des revendications 16 à 19, **caractérisé en ce que** sur le dessous (40) du plateau d'étalage (30) dans la zone du fond du plateau (12) est prévue une couche de mousse (41) dont la déformabilité élastique est plus élevée que celle du matériau de mousse du coussin-présentoir (37).
